# EUROPEAN PATENT APPLICATION

(11) **EP 4 312 462 A1**
(43) Date of publication of application: **31.01.2024**
(21) Application number: 23188054.3
(22) Date of filing: 27.07.2023
(51) Int. Cl.: H04W 76/23

(54) **METHOD AND APPARATUS FOR MANAGING PEER-TO-PEER SERVICES WHEN STATION IS TEMPORARILY UNAVAILABLE ON PRIMARY BAND DUE TO SUBBAND TRANSITION**

(30) Priority: 29.07.2022 US 202263369774 P; 26.07.2023 US 202318226267
(71) Applicant: MediaTek Inc., Hsin-Chu 300 (TW)
(72) Inventor: HSU, Chien-Fang, 30078 Hsinchu City (TW); KANG, Hao-Hua, 30078 Hsinchu City (TW); KUO, Chih-Chun, 30078 Hsinchu City (TW)
(74) Representative: Hoefer & Partner Patentanwälte mbB

(57) **Abstract**

A wireless communication device (102, AP) includes a network interface circuit (117) and a control circuit (116). The network interface circuit (117) communicates with a first wireless communication device (104_1, STA A) and a second wireless communication device (104_2, STAB), where there is a peer-to-peer link established between the first wireless communication device (104_1, STA A) and the second wireless communication device (104_2, STA B). The control circuit generates a first frame, and sends the first frame to the second wireless communication device (104_2, STA B) through the network interface circuit (117), where the first frame is arranged to inform the second wireless communication device (104_2, STAB) of a subband transition at the first wireless communication device (104_1, STAA).

## Description

### Field of the Invention

The present invention relates to wireless communications, and more particularly, to a method and apparatus for managing peer-to-peer services when a station is temporarily unavailable on the primary band due to a subband transition.

### Background of the Invention

When an access point (AP) operating on a link with a large bandwidth, it may not utilize the whole operating bandwidth (e.g. 320 MHz) efficiently when interference from an overlapping basic service set (OBSS) occupies the primary channel or when the non-AP stations (STAs) are not capable of operating at the large bandwidth as AP, which results in wastage of bandwidth capabilities of the AP. To address this issue, one typical solution may enable the AP to use subband transition for increasing the efficiency by allowing a non-AP STA to operate on a subband (in which a secondary channel is allocated) outside a primary band (in which a primary channel is allocated).

When a non-AP STA (STA A) associates with an AP on a link and performs frame exchange with the associated AP, the non-AP STA may also have another peer-to-peer (P2P) link with another non-AP STA (STA B). The P2P link between STA A and STA B may occupy the same primary band as the association link with the AP. The transmission bandwidth between STA A and AP may be different from the transmission bandwidth between STA A and STA B. In some scenarios, STA A may be temporarily unavailable for frame exchange on the primary band due to a subband transition. However, STA B is not aware of the subband transition at STA A, and stays on the primary band. As a result, the P2P link between STA A and STA B may be dropped due to failure of frame exchange initiated by STA B. Hence, there is a need for an innovative design which can manage peer-to-peer services under a subband transition scenario.

### Summary of the Invention

This in mind, the present invention aims at providing a method and apparatus for managing peer-to-peer services when a station is temporarily unavailable on the primary band due to a subband transition.

This is achieved by the wireless communication devices according to the independent claims. The dependent claims pertain to corresponding further developments and improvements.

As will be seen more clearly from the detailed description following below, the claimed wireless communication device includes a network interface circuit and a control circuit. The network interface circuit is arranged to communicate with a first wireless communication device and a second wireless communication device, wherein there is a peer-to-peer link established between the first wireless communication device and the second wireless communication device. The control circuit is arranged to generate a first frame and send the first frame to the second wireless communication device through the network interface circuit, wherein the first frame is arranged to inform the second wireless communication device of a subband transition at the first wireless communication device.

Another claimed wireless communication device includes a network interface circuit and a control circuit. The network interface circuit is arranged to communicate with a first wireless communication device, wherein there is a peer-to-peer link established between the wireless communication device and the first wireless communication device. The control circuit is arranged to generate a first frame and send the first frame through the network interface circuit, wherein the first frame is arranged to inform the first wireless communication device of a subband transition at the wireless communication device.

Another claimed wireless communication device includes a network interface circuit and a control circuit. The network interface circuit is arranged to communicate with a first wireless communication device, wherein there is a peer-to-peer link established between the first wireless communication device and a second wireless communication device. The control circuit is arranged to generate a frame and send the frame to the first wireless communication device through the network interface circuit, wherein the frame is arranged to carry timing information of a subband transition at the first wireless communication device that is requested by the wireless communication device, and is further arranged to carry a network allocation vector (NAV) setting to protect a period on the primary band, wherein the first wireless communication device operates on a subband during the period.

Another claimed wireless communication device includes a network interface circuit and a control circuit. The network interface circuit is arranged to communicate with a first wireless communication device and a second wireless communication device, wherein there is a peer-to-peer link established between the wireless communication device and the second wireless communication device. The control circuit is arranged to perform a frame exchange sequence between the wireless communication device and the second wireless communication device on a primary band and a frame exchange sequence between the wireless communication device and the first wireless communication device on a subband in a time-division multiplexing (TDM) manner.

### Brief Description of the Drawings

In the following, the invention is further illustrated by way of example, taking reference to the accompanying drawings. Thereof
FIG. 1 is a diagram illustrating one wireless communication system according to an embodiment of the present invention,
FIG. 2 is a diagram illustrating an AP assistance solution according to an embodiment of the present invention,
FIG. 3 is a diagram illustrating another AP assistance solution according to an embodiment of the present invention,
FIG. 4 is a diagram illustrating yet another AP assistance solution according to an embodiment of the present invention,
FIG. 5 is a diagram illustrating still yet another AP assistance solution according to an embodiment of the present invention,
FIG. 6 is a diagram illustrating a non-AP STA forwarding solution according to an embodiment of the present invention,
FIG. 7 is a diagram illustrating another non-AP STA forwarding solution according to an embodiment of the present invention,
FIG. 8 is a diagram illustrating yet another non-AP STA forwarding solution according to an embodiment of the present invention,
FIG. 9 is a diagram illustrating still yet another non-AP STA forwarding solution according to an embodiment of the present invention,
FIG. 10 is a diagram illustrating a NAV protection solution according to an embodiment of the present invention, and
FIG. 11 is a diagram illustrating a TDM mechanism case according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

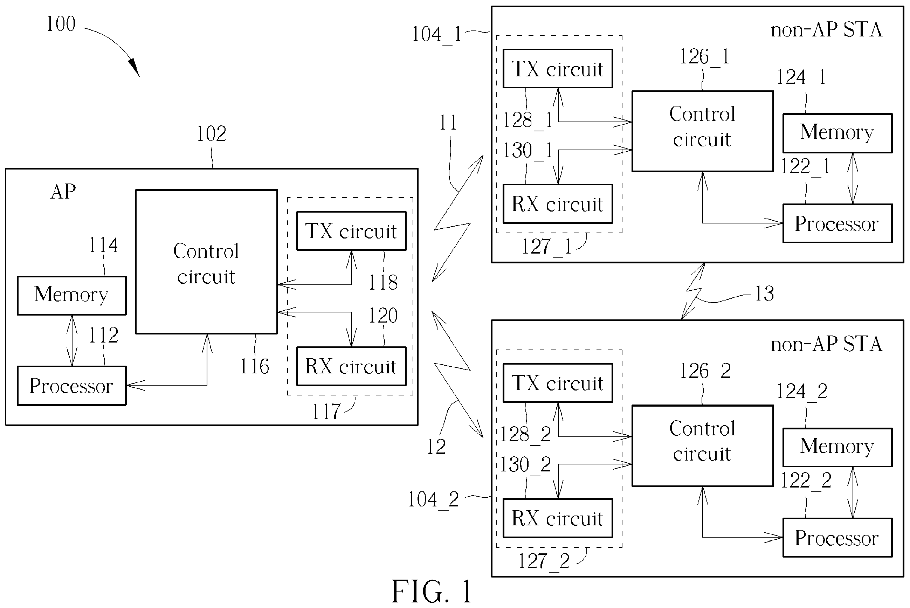

FIG. 1 is a diagram illustrating one wireless communication system according to an embodiment of the present invention. The wireless communication system 100 includes a plurality of wireless communication devices. For example, the wireless communication system 100 is a Wi-Fi system, and the wireless communication devices include an access point (AP) 102 and two non-AP stations (STAs) 104_1 and 104_2. For brevity and simplicity, only three wireless communication devices are shown in FIG. 1. In practice, the wireless communication system 100 is allowed to have more than three wireless communication devices, including an AP and more than two non-AP STAs in the same basic service set (BSS).

The wireless communication devices may have the same or similar circuit structure. As shown in FIG. 1, the AP 102 includes a processor 112, a memory 114, a control circuit 116, and a network interface circuit 117, where the network interface circuit 117 includes a transmitter (TX) circuit 118 and a receiver (RX) circuit 120. The memory 114 is arranged to store a program code. The processor 112 is arranged to load and execute the program code to manage the AP 102. The control circuit 116 is arranged to control wireless communications with the non-AP STA 104_1 and/or the non-AP STA 104_2. In this embodiment, one association link 11 is established between AP 102 and non-AP STA 104_1, and another association link 12 is established between PA 102 and non-AP STA 104_2. Specifically, the control circuit 116 controls the TX circuit 118 of the network interface circuit 117 to deal with downlink (DL) traffic between AP 102 and non-AP STA 104_1/104_2, and controls the RX circuit 120 of the network interface circuit 117 to deal with uplink (LTL) traffic between AP 102 and non-AP STA 104_1/104_2.

The non-AP STA 104_1 includes a processor 122_1, a memory 124_1, a control circuit 126_1, and a network interface circuit 127_1, where the network interface circuit 127_1 includes a TX circuit 128_1 and an RX circuit 130_1. The memory 124_1 is arranged to store a program code. The processor 122_1 is arranged to load and execute the program code to manage the non-AP STA 104_1. The control circuit 126_1 is arranged to control wireless communications with the AP 102 and/or non-AP STA 104_2. The control circuit 126_1 controls the TX circuit 128_1 of the network interface circuit 127_1 to deal with LTL traffic between AP 102 and non-AP STA 104_1, and controls the RX circuit 130_1 of the network interface circuit 127_1 to deal with DL traffic between AP 102 and non-AP STA 104_1. In this embodiment, there is a P2P link 13 established between non-AP STAs 104_1 and 104_2. Hence, the control circuit 126_1 also controls the network interface circuit 127_1 to deal with frame exchange over the P2P link 13.

The non-AP STA 104_2 includes a processor 122_2, a memory 124_2, a control circuit 126_2, and a network interface circuit 127_2, where the network interface circuit 127_2 includes a TX circuit 128_2 and an RX circuit 130_2. The memory 124_2 is arranged to store a program code. The processor 122_2 is arranged to load and execute the program code to manage the non-AP STA 104_2. The control circuit 126_2 is arranged to control wireless communications with the AP 102 and/or non-AP STA 104_1. In a first case where the association link 12 is established between non-AP STA 104_2 and AP 102 and no P2P link 13 is established between non-AP STAs 104_1 and 104_2, the control circuit 126_2 controls the TX circuit 128_2 of the network interface circuit 127_2 to deal with UL traffic between AP 102 and non-AP STA 104_2, and controls the RX circuit 130_2 of the network interface circuit 127_2 to deal with DL traffic between AP 102 and non-AP STA 104_2. In a second case where the association link 12 is established between non-AP STA 104_2 and AP 102 and the P2P link 13 is established between non-AP STAs 104_1 and 104_2, the control circuit 126_2 controls the TX circuit 128_2 of the network interface circuit 127_2 to deal with UL traffic between AP 102 and non-AP STA 104_2, controls the RX circuit 130_2 of the network interface circuit 127_2 to deal with DL traffic between AP 102 and non-AP STA 104, and further controls the network interface circuit 127_2 to deal with frame exchange over the P2P link 13. In a third case where no association link 12 is established between non-AP STA 104_2 and AP 102 and the P2P link 13 is established between non-AP STAs 104_1 and 104_2, the control circuit 126_2 controls the network interface circuit 127_2 to deal with frame exchange over the P2P link 13.

It should be noted that only the components pertinent to the present invention are illustrated in FIG. 1. In practice, the AP 102 may include additional components to achieve designated functions, and/or the non-AP STA 104_1/104_2 may include additional components to achieve designated functions.

In some embodiments of the present invention, the non-AP STA 104_1 may be temporarily unavailable on the primary band due to parking at a specific subband. For example, the AP 102 may support 320 MHz as the maximum bandwidth of operation on any link, and the non-AP STA 104_1 may support only a smaller bandwidth (e.g., 160 MHz or 80 MHz) as the maximum bandwidth of operation. Hence, the 320 MHz bandwidth may be regarded as having one 160MHz primary band and one 160MHz subband, or may be regarded as having one 80MHz primary band and three 80MHz subbands. It should be noted that the terms "subband" and "subchannel" may be interchangeable. The AP 102 may request the non-AP STA 104_1 to switch from the primary band to a specific subband for temporary frame exchange. When the AP 102 is aware of the existence of the P2P link 13 and knows the address of the non-AP STA 104_2, the AP 102 can help the non-AP STA 104_1 to inform the non-AP STA 104_2 of a subband transition at the non-AP STA 104_1.

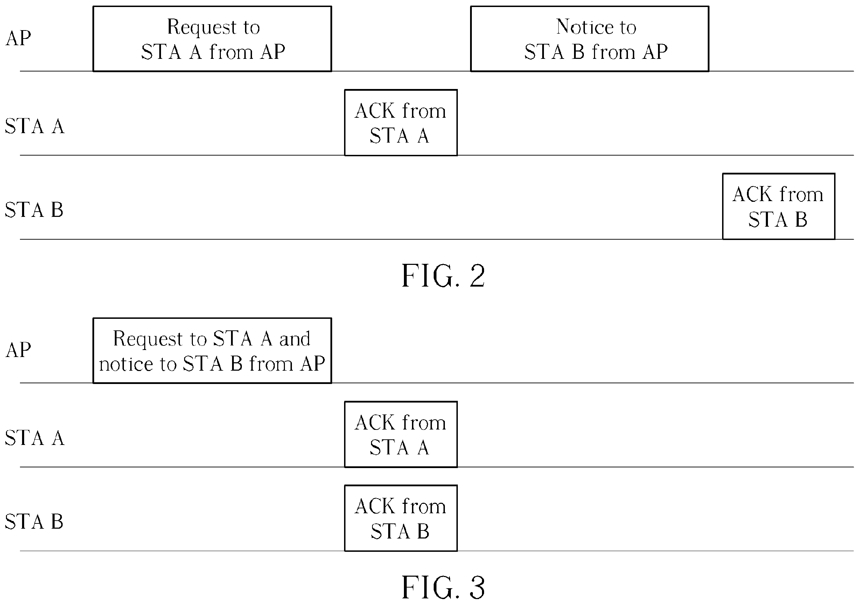

FIG. 2 is a diagram illustrating an AP assistance solution according to an embodiment of the present invention. The AP 102 (which requests a subband transition at the non-AP STA 104_1) is denoted by "AP" in FIG. 2, the non-AP STA 104_1 (which is requested to have a subband transition) is denoted by "STA A" in FIG. 2, and the non-AP STA 104_2 (which shares the P2P link 13 with the non-AP STA 104_1) is denoted by "STAB" in FIG. 2. Regarding the AP 102, the control circuit 116 generates a request frame to the non-AP STA 104_1 through the network interface circuit 117 which is labeled as "Request to STA A from AP" in the FIG. 2 (particularly, TX circuit 118 of network interface circuit 117), where the request frame is used for triggering the non-AP STA 104_1 to park at a specific subband, and carries timing information of the subband transition between the primary band and the specific subband. For example, the timing information of the subband transition may include parameters such as a start time of the subband transition (i.e., beginning of a period in which the non-AP STA 104_1 parks at the specific subband), a duration of parking at the specific subband, an end time of the subband transition (i.e., ending of a period in which the non-AP STA 104_1 parks at the specific subband), or a combination thereof.

Regarding the non-AP STA 104_1, the control circuit 126_1 receives the request frame from the AP 102 through the network interface circuit 127_1 which is labeled as "ACK from STA A" in the FIG. 2 (particularly, RX circuit 130_1 of network interface circuit 127_1). After the request frame is received and parsed, the control circuit 126_1 generates a response frame, and sends the response frame to the AP 102 through the network interface circuit 127_1 (particularly, TX circuit 128_1 of network interface circuit 127_1). Hence, the control circuit 116 of the AP 102 receives the response frame from non-AP STA 104_1 through the network interface circuit 117 (particularly, RX circuit 120 of network interface circuit 117). Specifically, the response frame is generated from the non-AP STA 104_1 in response to the request frame sent by the AP 102. For example, the response frame may indicate whether the subband transition is accepted or rejected by the non-AP STA 104_1.

In a case where the subband transition requested by the AP 102 is accepted by the non-AP STA 104_1, the control circuit 116 of the AP 102 generates a request frame (or a notice frame) to the non-AP STA 104_2 through the network interface circuit 117 (particularly, TX circuit 118 of network interface circuit 117), where the request frame (notice frame) is used to inform the non-AP STA 104_2 of the subband transition at the non-AP STA 104_1 that is requested by the AP 102. The notice information of the subband transition that is included in the request frame (notice frame) sent to non-AP STA 104_2 from AP 102 is not necessarily the same as the timing information of the subband transition that is included in the request frame sent to non-AP STA 104_1 from AP 102. In some embodiments, parameters included in the request frame (notice frame) sent to the non-AP STA 104_2 may be the same as the parameters of the subband transition at the non-AP STA 104_1. However, if the AP 102 wants to allocate dedicated time for frame exchange with the non-AP STA 104_1, parameters included in the request frame (notice frame) sent to the non-AP STA 104_2 may not be the same as the parameters of the subband transition at the non-AP STA 104_1. That is, the parameters included in the request frame (notice frame) sent to the non-AP STA 104_2 may include partial/modified parameters derived from parameters included in the request frame sent to the non-AP STA 104_1. For example, a shorter subband transition period is provided to the non-AP STA 104_2 to ensure that the P2P link 13 occupies a shorter time period. However, this is for illustrative purposes only, and is not meant to be a limitation of the present invention.

Regarding the non-AP STA 104_2, the control circuit 126_2 receives the request frame (notice frame) through the network interface circuit 127_2 (particularly, RX circuit 130_2 of network interface circuit 127_2). After the request frame (notice frame) is received and parsed, the control circuit 126_2 generates a response frame, and sends the response frame to the AP 102 through the network interface circuit 127_2 (particularly, TX circuit 128_2 of network interface circuit 127_2). Hence, the control circuit 116 of the AP 102 receives the response frame from the non-AP STA 140_2 through the network interface circuit 117 (particularly, RX circuit 120 of network interface circuit 117). Specifically, the response frame is generated from the non-AP STA 104_2 in response to the request frame (notice frame) sent by the AP 102. For example, the response frame may indicate whether the same subband transition at the non-AP STA 140_1 is accepted or rejected by the non-AP STA 140_2. In a case where the subband transition is accepted by non-AP STA 104_2, the P2P link 13 will remain alive since both of non-AP STAs 104_1 and 104_2 are switched from the primary band to the same specific subband.

In one exemplary design, the request frame sent to non-AP STA 104_1 from AP 102 and the request frame (notice frame) sent to non-AP STA 104_2 from AP 102 may be different frames. In another exemplary design, the request frame sent to non-AP STA 104_1 from AP 102 and the request frame (notice frame) sent to non-AP STA 104_2 from AP 102 may be different frames included in the same physical layer protocol data unit (PPDU) that is transmitted by Multiple User-Multiple Input Multiple Output (MU-MIMO) or Multiple User-Orthogonal Frequency-Division Multiple Access (MU-OFDMA).

FIG. 3 is a diagram illustrating another AP assistance solution according to an embodiment of the present invention. The AP 102 (which requests a subband transition at the non-AP STA 104_1) is denoted by "AP" in FIG. 3, the non-AP STA 104_1 (which is requested to have a subband transition) is denoted by "STA A" in FIG. 3, and the non-AP STA 104_2 (which shares the P2P link 13 with the non-AP STA 104_1) is denoted by "STA B" in FIG. 3. The major difference between the embodiments shown in FIG. 2 and FIG. 3 is that the request frame sent to non-AP STA 104_1 from AP 102 and the request frame (notice frame) sent to non-AP STA 104_2 from AP 102 may be the same frame such as a multi-user downlink (MU DL) frame. Similarly, parameters of subband transition sent to the non-AP STA 104_2 may be the same as the parameters of subband transition sent to the non-AP STA 104_1, or may not be the same as the parameters of subband transition sent to the non-AP STA 104_1.

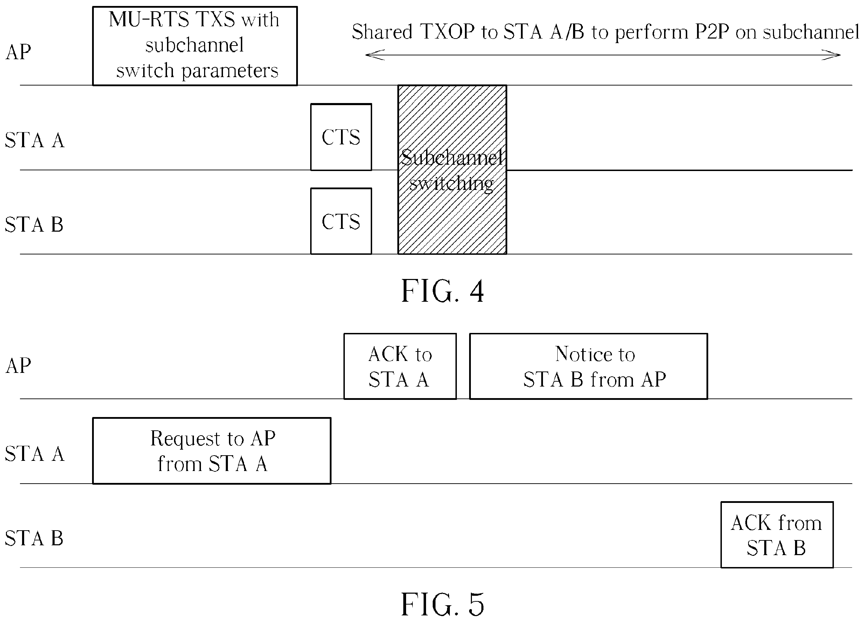

In some embodiment of the present invention, a multi-user request to send (MU-RTS) trigger frame may be sent from AP 102 to non-AP STAs 104_1 and 104_2, as illustrated in FIG. 4. After receiving the MU-RTS trigger frame, each of non-AP STAs 104_1 and 104_2 responds with a clear to send (CTS) frame. In this embodiment, the MU-RTS trigger frame may carry indication of a shared transmission opportunity (TXOP) (which may be a part of a TXOP owned by the AP 102), and may also carry relevant subband transition parameters, such that both of the non-AP STAs 104_1 and 104_2 may park at the same specific subband, and perform P2P frame exchange on the specific subband during the shared TXOP indicated by the MU-RTS trigger frame. The MU-RTS trigger frame that is capable of indicating a shared TXOP may also be referred to as a MU-RTS TXOP sharing (TXS) trigger frame. In some embodiments of the present invention, the terms "MU-RTS trigger frame" and "MU-RTS TXS trigger frame" may be interchangeable.

In above embodiments, the subband transition at the non-AP STA 104_1 is requested by the AP 102. Alternatively, after the non-AP STA 104_1 is associated with the AP 102, the non-AP STA 104_1 may spontaneously send a request frame to the AP to indicate/request that it wants to transit to a specific subband (e.g., one 160MHz subband within the 320MHz bandwidth supported by AP 102, or one of three 80MHz subbands within the 320MHz bandwidth supported by AP 102). The same AP assistance concept mentioned above can also apply under such a scenario.

FIG. 5 is a diagram illustrating still yet another AP assistance solution according to an embodiment of the present invention. The AP 102 (which receives a request of a subband transition from the non-AP STA 104_1) is denoted by "AP" in FIG. 5, the non-AP STA 104_1 (which requests a subband transition) is denoted by "STA A" in FIG. 5, and the non-AP STA 104_2 (which shares the P2P link 13 with the non-AP STA 104_1) is denoted by "STAB" in FIG. 5. Regarding the non-AP STA 104_1, the control circuit 126_1 generates a request frame to the AP 102 through the network interface circuit 127_1 (particularly, TX circuit 128_1 of network interface circuit 127_1), where the request frame is used for indicating that the non-AP STA 104_1 wants to transit to a specific subband, and carries timing information of the subband transition between the primary band and the specific subband. For example, the timing information of the subband transition may include parameters such as a start time of the subband transition (i.e., beginning of a period in which the non-AP STA 104_1 parks at the specific subband), a duration of parking at the specific subband, an end time of the subband transition (i.e., ending of a period in which the non-AP STA 104_1 parks at the specific subband), or a combination thereof.

Regarding the AP 102, the control circuit 116 receives the request frame from non-AP STA 104_1 through the network interface circuit 117 (particularly, RX circuit 120 of network interface circuit 117). After the request frame is received and parsed, the control circuit 116 generates a response frame, and sends the response frame to the non-AP 104_1 through the network interface circuit 117 (particularly, TX circuit 118 of network interface circuit 117). Hence, the control circuit 126_1 of the non-AP STA 104_1 receives the response frame from AP 102 through the network interface circuit 127_1 (particularly, RX circuit 130_1 of network interface circuit 127_1). Specifically, the response frame is generated from the AP 102 in response to the request frame sent by the non-AP STA 104_1. For example, the response frame may indicate whether the subband transition is accepted or rejected by AP 102.

In a case where the subband transition requested by the non-AP STA 104_1 is accepted by the AP 102, the control circuit 116 of the AP 102 generates a request frame (or a notice frame) to the non-AP STA 104_2 through the network interface circuit 117 (particularly, TX circuit 118 of network interface circuit 117), where the request frame (notice frame) is used to inform the non-AP STA 104_2 of the subband transition at the non-AP STA 104_1 that is requested by the non-AP STA 104_1. Since a person skilled in the art can readily understand details of the embodiment shown in FIG. 5 after reading above paragraphs, further description is omitted here for brevity.

In above embodiments, when the AP 102 is aware of the existence of the P2P link 13 and knows the address of the non-AP STA 104_2, the AP 102 can help the non-AP STA 104_1 to inform the non-AP STA 104_2 of a subband transition at the non-AP STA 104_1. Alternatively, the non-AP STA 104_1 can just forward parameters of the subband transition to the non-AP STA 104_2 without assistance of the AP 102.

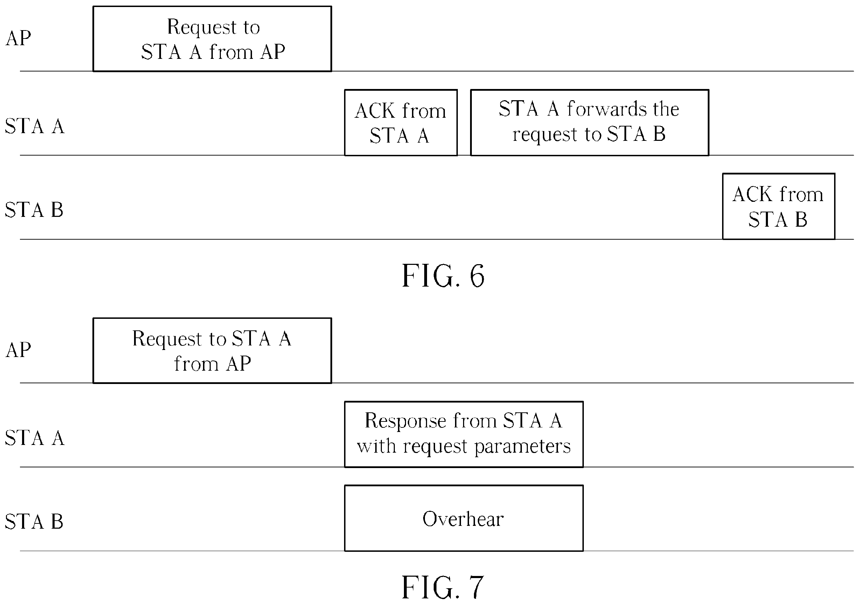

FIG. 6 is a diagram illustrating a non-AP STA forwarding solution according to an embodiment of the present invention. The AP 102 (which requests a subband transition at the non-AP STA 104_1) is denoted by "AP" in FIG. 6, the non-AP STA 104_1 (which is requested to have a subband transition) is denoted by "STA A" in FIG. 6, and the non-AP STA 104_2 (which shares the P2P link 13 with the non-AP STA 104_1) is denoted by "STAB" in FIG. 6. Regarding the AP 102, the control circuit 116 generates a request frame to the non-AP STA 104_1 through the network interface circuit 117 (particularly, TX circuit 118 of network interface circuit 117), where the request frame is used for triggering the non-AP STA 104_1 to park at a specific subband, and carries timing information of the subband transition between the primary band and the specific subband. For example, the timing information of the subband transition may include parameters such as a start time of the subband transition (i.e., beginning of a period in which the non-AP STA 104_1 parks at the specific subband), a duration of parking at the specific subband, an end time of the subband transition (i.e., ending of a period in which the non-AP STA 104_1 parks at the specific subband), or a combination thereof.

Regarding the non-AP STA 104_1, the control circuit 126_1 receives the request frame from the AP 102 through the network interface circuit 127_1 (particularly, RX circuit 130_1 of network interface circuit 127_1). After the request frame is received and parsed, the control circuit 126_1 generates a response frame, and sends the response frame to the AP 102 through the network interface circuit 127_1 (particularly, TX circuit 128_1 of network interface circuit 127_1). Hence, the control circuit 116 of the AP 102 receives the response frame through the network interface circuit 117 (particularly, RX circuit 120 of network interface circuit 117). Specifically, the response frame is generated from the non-AP STA 104_1 in response to the request frame sent by the AP 102. For example, the response frame may indicate whether the subband transition is accepted or rejected by the non-AP STA 104_1.

In a case where the subband transition requested by the AP 102 is accepted by the non-AP STA 104, the control circuit 126_1 of the non-AP STA 104_1 generates a request frame (which is generated based on the request from sent from AP 102) to the non-AP STA 104_2 through the network interface circuit 127_1 (particularly, TX circuit 128_1 of network interface circuit 127_1), where the request frame is used to inform the non-AP STA 104_2 of the subband transition at the non-AP STA 104_1 that is requested by the AP 102. The notice information of the subband transition that is included in the request frame sent to the non-AP STA 104_2 is not necessarily the same as the timing information of the subband transition that is included in the request frame sent to the non-AP STA 104_1. In some embodiments, parameters included in the request frame (notice frame) sent to the non-AP STA 104_2 may be the same as the parameters of the subband transition at the non-AP STA 104_1. However, if the non-AP STA 104_1 wants to ensure that the P2P link 13 occupies a shorter time period so the frame exchange with AP 102 can be performed within a longer time period, parameters included in the request frame sent to the non-AP STA 104_2 may not be the same as the parameters of the subband transition at the non-AP STA 104_1.

Regarding the non-AP STA 104_2, the control circuit 126_2 receives the request frame from the non-AP STA 104_1 through the network interface circuit 127_2 (particularly, RX circuit 130_2 of network interface circuit 127_2). After the request frame is received and parsed, the control circuit 126_2 generates a response frame, and sends the response frame to the non-AP STA 104_1 through the network interface circuit 127_2 (particularly, TX circuit 128_2 of network interface circuit 127_2). Hence, the control circuit 126_1 of the non-AP STA 104_1 receives the response frame through the network interface circuit 127_1 (particularly, RX circuit 130_1 of network interface circuit 127_1). Specifically, the response frame is generated from the non-AP STA 104_2 in response to the request frame forwarded by the non-AP STA 104_1. In a case where the subband transition is accepted by non-AP STA 104_2, the P2P link 13 remains alive since both of non-AP STAs 104_1 and 104_2 are switched from the primary band to the same specific subband.

In the embodiment shown in FIG. 6, the response frame sent to AP 102 from non-AP STA 104_1 and the request frame forwarded to non-AP STA 104_2 from non-AP STA 104_1 are different frames. However, this is for illustrative purposes only, and is not meant to be a limitation of the present invention.

Regarding the embodiment shown in FIG. 6, the non-AP STA 104_1 needs to forward a request frame to the non-AP STA 104_2 immediately after sending a response frame to the AP 102. However, after receiving the request frame from the AP 102, the non-AP STA 104_1 may need to initiate the subband transition procedure immediately and may not have time to send the parameters of the subband transition to the non-AP STA 104_2 by request frame forwarding.

FIG. 7 is a diagram illustrating another non-AP forwarding solution according to an embodiment of the present invention. The AP 102 (which requests a subband transition at the non-AP STA 104_1) is denoted by "AP" in FIG. 7, the non-AP STA 104_1 (which is requested to have a subband transition) is denoted by "STA A" in FIG. 7, and the non-AP STA 104_2 (which shares the P2P link 13 with the non-AP STA 104_1) is denoted by "STAB" in FIG. 7. The major difference between the embodiments shown in FIG. 6 and FIG. 7 is that the response frame sent to AP 102 from non-AP STA 104_1 and the request frame forwarded to non-AP STA 104_2 from non-AP STA 104_1 may be the same frame. Specifically, the response frame sent to AP 102 from non-AP STA 104_1 further includes notice information of the subband transition at the non-AP STA 104_1, and the non-AP STA 104_2 can overhear the response frame to get the notice information. In some embodiments, parameters of subband transition to be overheard by the non-AP STA 104_2 may be the same as the parameters of subband transition sent to the non-AP STA 104_1 from AP 102. In some embodiments, parameters of subband transition to be overheard by the non-AP STA 104_2 may not be the same as the parameters of subband transition sent to the non-AP STA 104_1 from AP 102.

As mentioned above, after receiving the request frame from the AP 102, the non-AP STA 104_1 may need to initiate the subband transition procedure immediately and may not have time to send the parameters of the subband transition to the non-AP STA 104_2. To address this issue, the AP 102 may help the non-AP STA 104_1 to deal with the request frame forwarding.

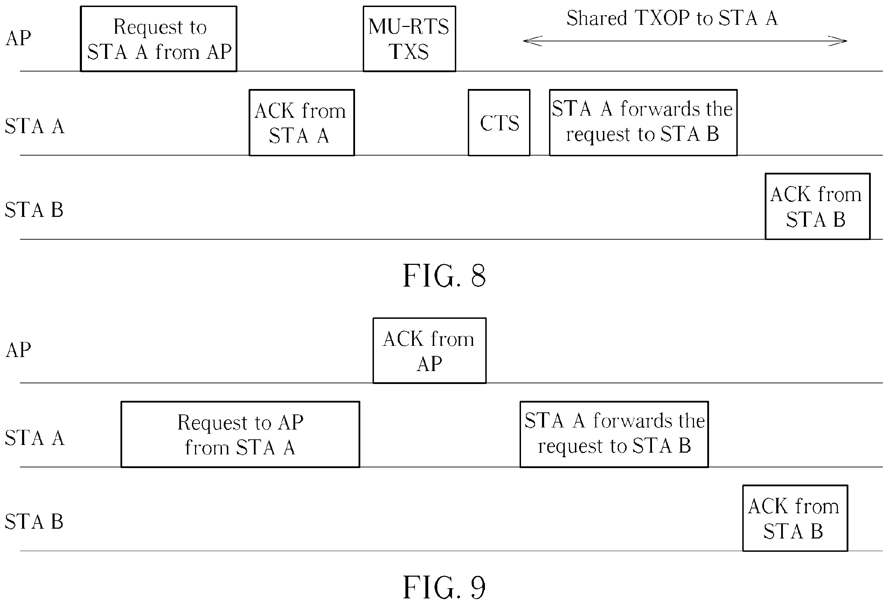

FIG. 8 is a diagram illustrating yet another non-AP forwarding solution according to an embodiment of the present invention. The AP 102 (which requests a subband transition at the non-AP STA 104_1) is denoted by "AP" in FIG. 8, the non-AP STA 104_1 (which is requested to have a subband transition) is denoted by "STA A" in FIG. 8, and the non-AP STA 104_2 (which shares the P2P link 13 with the non-AP STA 104_1) is denoted by "STAB" in FIG. 8. The major difference between the embodiments shown in FIG. 6 and FIG. 8 is that the AP 102 may apply TXOP sharing mechanism to share the TXOP for the non-AP STA 104_1. For example, the control circuit 116 of the AP 102 generates an MU-RTS trigger frame, and sends the MU-RTS trigger frame to the non-AP STA 104_1 through the network interface circuit 117 (particularly, TX circuit 118 of network interface circuit 117). In this way, the non-AP STA 104_1 sends parameters of the subband transition to the non-AP STA 104_2 by forwarding a request frame (which is generated based on the request frame received from AP 102) during a shared TXOP indicated by the MU-RTS trigger frame.

In above embodiments, the subband transition at the non-AP STA 104_1 is requested by the AP 102. Alternatively, after the non-AP STA 104_1 is associated with the AP 102, the non-AP STA 104_1 may spontaneously send a request frame to the AP 102 to indicate/request that it wants to transit to a specific subband (e.g., one 160MHz subband within the 320MHz bandwidth supported by AP 102, or one of three 80MHz subbands within the 320MHz bandwidth supported by AP 102). The same non-AP STA forwarding concept mentioned above can also apply under such a scenario.

FIG. 9 is a diagram illustrating still yet another non-AP STA forwarding solution according to an embodiment of the present invention. The AP 102 (which receives a request of a subband transition from the non-AP STA 104_1) is denoted by "AP" in FIG. 9, the non-AP STA 104_1 (which requests a subband transition) is denoted by "STA A" in FIG. 9, and the non-AP STA 104_2 (which shares the P2P link 13 with the non-AP STA 104_1) is denoted by "STAB" in FIG. 9. Regarding the non-AP STA 104_1, the control circuit 126_1 generates a request frame to the AP 102 through the network interface circuit 127_1 (particularly, TX circuit 128_1 of network interface circuit 127_1), where the request frame is used for indicating that the non-AP STA 104_1 wants to transit to a specific subband, and carries timing information of the subband transition between the primary band and the specific subband. For example, the timing information of the subband transition may include parameters such as a start time of the subband transition (i.e., beginning of a period in which the non-AP STA 104_1 parks at the specific subband), a duration of parking at the specific subband, an end time of the subband transition (i.e., ending of a period in which the non-AP STA 104_1 parks at the specific subband), or a combination thereof.

Regarding the AP 102, the control circuit 116 receives the request frame from non-AP STA 104_1 through the network interface circuit 117 (particularly, RX circuit 120 of network interface circuit 117). After the request frame is received and parsed, the control circuit 116 generates a response frame, and sends the response frame to the non-AP 104_1 through the network interface circuit 117 (particularly, TX circuit 118 of network interface circuit 117). Hence, the control circuit 126_1 of the non-AP STA 104_1 receives the response frame from AP 102 through the network interface circuit 127_1 (particularly, RX circuit 130_1 of network interface circuit 127_1). Specifically, the response frame is generated from the AP 102 in response to the request frame sent by the non-AP STA 104_1. For example, the response frame may indicate whether the subband transition is accepted or rejected by AP 102.

In a case where the subband transition requested by the non-AP STA 104_1 is accepted by the AP 102, the control circuit 126_1 of the non-AP 104_1 forwards a request frame (which is derived from the request frame sent to AP 102) to the non-AP STA 104_2 through the network interface circuit 127_1 (particularly, TX circuit 128_1 of network interface circuit 127_1), where the request frame is used to inform the non-AP STA 104_2 of the subband transition at the non-AP STA 104_1 that is requested by the non-AP STA 104_1. Since a person skilled in the art can readily understand details of the embodiment shown in FIG. 9 after reading above paragraphs, further description is omitted here for brevity.

Consider a case where the non-AP STA 104_1 is temporarily unavailable for frame exchange on the primary band due to a subband transition, and the non-AP STA 104_2 still stays on the primary band. If the non-AP STA 104_2 tries to perform frame exchange with the non-AP STA 104_1 through the P2P link 13, the P2P link 13 may be dropped due to failed frame exchange. To address this issue, the AP 102 may help to reserve the primary channel by network allocation vector (NAV) protection.

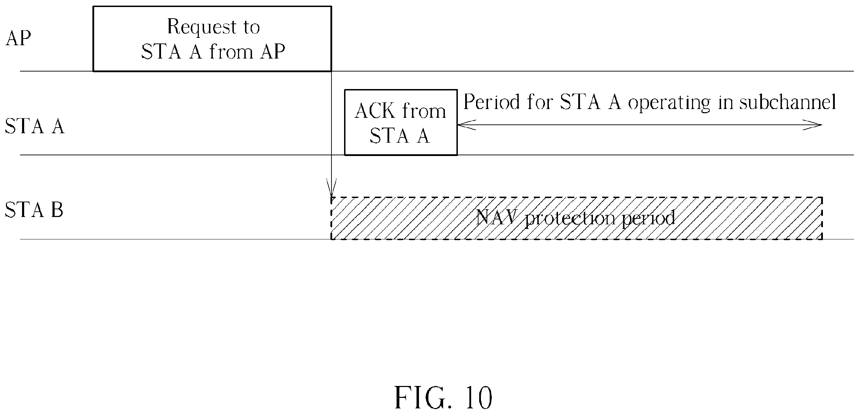

FIG. 10 is a diagram illustrating a NAV protection solution according to an embodiment of the present invention. The AP 102 (which requests a subband transition at the non-AP STA 104_1) is denoted by "AP" in FIG. 10, the non-AP STA 104_1 (which is requested to have a subband transition) is denoted by "STA A" in FIG. 10, and the non-AP STA 104_2 (which shares the P2P link 13 with the non-AP STA 104_1) is denoted by "STAB" in FIG. 10. Regarding the AP 102, the control circuit 116 generates a request frame to the non-AP STA 104_1 through the network interface circuit 117 (particularly, TX circuit 118 of network interface circuit 117), where the request frame is used for triggering the non-AP STA 104_1 to park at a specific subband, and carries timing information of the subband transition between the primary band and the specific subband. In this embodiment, the request frame sent from the AP 102 to the non-AP STA 104_1 further includes a NAV setting which is intended to protect a period in which the non-AP STA 104_1 operates on the specific subband. In this way, the non-AP STA 104_2 that still stays on the primary band is blocked from initializing the frame exchange sequence with the non-AP STA 104_1 during the NAV protection period that covers the period in which the non-AP STA 104_1 operates on the specific subband. To put it simply, with the help of the NAV protection set by the AP 102, the P2P link 13 is temporarily paused, and will not be dropped due to failed frame exchange.

As mentioned above, if the non-AP STA 104_2 (which stays at the primary band) tries to perform frame exchange with the non-AP STA 104_1 (which is temporarily unavailable for frame exchange on the primary band due to a subband transition), the P2P link 13 may be dropped due to failed frame exchange. In an alternative design, the non-AP STA 104_1 may employ a time-division multiplexing (TDM) mechanism to achieve frame exchange on the primary band and frame exchange on the subband.

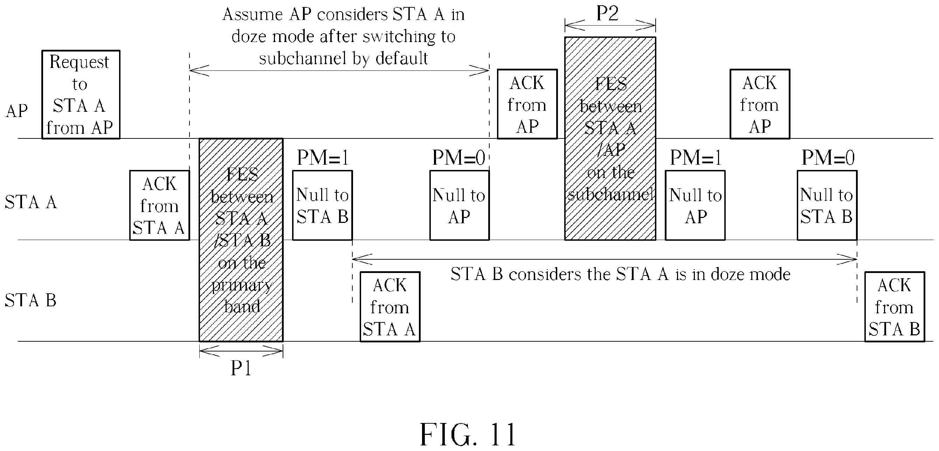

FIG. 11 is a diagram illustrating a TDM mechanism case according to an embodiment of the present invention. The AP 102 (which requests a subband transition at the non-AP STA 104_1) is denoted by "AP" in FIG. 11, the non-AP STA 104_1 (which is requested to have a subband transition) is denoted by "STA A" in FIG. 11, and the non-AP STA 104_2 (which shares the P2P link 13 with the non-AP STA 104_1) is denoted by "STAB" in FIG. 11. In some scenarios, the non-AP STA 104_1 may still need to support P2P link's frame exchange during a period in which the non-AP STA 104_1 parks at the specific subband. In this embodiment, the control circuit 126_1 of the non-AP STA 104_1 is arranged to perform a frame exchange sequence between non-AP STAs 104_1 and 104_2 on a primary band and a frame exchange sequence between non-AP STA 104_1 and AP 102 on a subband in a TDM manner, where the TDM manner is managed by power save indication which uses power management (PM) bit in the 802.11 media access control (MAC) header, or by absence period announcement which uses NOA (Notice of Absence) protocol if the non-AP STA 104_1 is represented as a group owner (GO) in the Wi-Fi Direct P2P link. That is, the non-AP STA 104_1 may be available for frame exchange with the non-AP STA 104_2 on the primary band before sending a notice frame (notice) to inform the non-AP STA 104_2 of unavailability of the non-AP STA 104_1, and then the non-AP STA 104_1 may be available for frame exchange with the AP 102 on the specific subband after sending another notice frame (notice) to inform the AP 102 of availability of the non-AP STA 104_1.

In the embodiment shown in FIG. 11, it is assumed that the AP 102 considers the non-AP STA 104_1 as operating in a doze mode after switching from the primary band to the specific subband by default. Hence, the non-AP STA 104_1 may perform frame exchange with the non-AP STA 104_2 on the primary band during a period P1. At the end of the period P1, the non-AP STA 104_1 sends a null frame with PM=1 to the non-AP STA 104_2. After the null frame with PM=1 is successfully received by the non-AP STA 104_2, the non-AP STA 104_2 considers the non-AP STA 104_1 as operating in a doze mode. Next, the non-AP STA 104_1 sends a null frame with PM=0 to the AP 102. After the null frame with PM=0 is successfully received by the AP 102, the AP 102 considers the non-AP STA 104_1 as not operating in a doze mode. Hence, the non-AP STA 104_1 may perform frame exchange with the AP 102 on the specific subband during a period P2. It should be noted that the periods P1 and P2 are non-overlapping periods. At the end of the period P2, the non-AP STA 104_1 sends a null frame with PM=1 to the AP 102. After the null frame with PM=1 is successfully received by the AP 102, the AP 102 considers the non-AP STA 104_1 as operating in a doze mode. Next, the non-AP STA 104_1 sends a null frame with PM=0 to the non-AP STA 104_2. After the null frame with PM=0 is successfully received by the non-AP STA 104_2, the non-AP STA 104_2 considers the non-AP STA 104_1 as not operating in a doze mode. Hence, the non-AP STA 104_1 may perform frame exchange with the AP 102 on the specific subband again.

As mentioned above, the non-AP STA 104_2 may also transit to the specific subband after being notified of the subband transition at the non-AP STA 104_1 by the proposed AP assistance solution or the proposed non-AP forwarding solution. For some reasons, the non-AP STA 104_1 may return to the primary band before a pre-determined time instant (e.g., a pre-determined end time of the subband transition). The non-AP STA 104_1 may not be aware of the exception, and may keep staying on the specific subband until the pre-determined time instant. The AP 102 and/or the non-AP STA 104_1 may further support exception handling. For example, the control circuit 116 of the AP 102 is further arranged to generate a notice frame and send the notice frame to the non-AP STA 104_2 through the network interface circuit 117 (particularly, TX circuit 118 of network interface circuit 117), where the notice frame is arranged to inform the non-AP STA 104_2 of an ending status of the subband transition at the non-AP STA 104_1. For example, the ending status of the subband transition at the non-AP STA 104_1 may show that the non-AP STA 104_1 has returned to the primary band, or may show that the non-AP STA 104_1 is to return to the primary band at a certain time instant. For another example, the control circuit 126_1 of the non-AP STA 104_1 is further arranged to generate a notice frame and send the notice frame to the non-AP STA 104_2 through the network interface circuit 127_1 (particularly, TX circuit 128_1 of network interface circuit 127_1), where the notice frame is arranged to inform the non-AP STA 104_2 of an ending status of the subband transition at the non-AP STA 104_1. For example, the ending status of the subband transition at the non-AP STA 104_1 may show that the non-AP STA 104_1 is to return to the primary band at a certain time instant. The proposed exception handling scheme may also apply when the end time of the subband transition at the non-AP STA 104_1 is undefined in a request frame.

## Claims

1. A wireless communication device (102, AP) **characterized by**:
a network interface circuit (117), arranged to communicate with a first wireless communication device (104_1, STA A) and a second wireless communication device (104_2, STA B), wherein there is a peer-to-peer link established between the first wireless communication device (104_1, STA A) and the second wireless communication device (104_2, STAB); and
a control circuit (116), arranged to generate a first frame and send the first frame to the second wireless communication device (104_1, STA A) through the network interface circuit (117), wherein the first frame is arranged to inform the second wireless communication device (104_2, STA B) of a subband transition at the first wireless communication device (104_1, STAA).

2. The wireless communication device (102, AP) of claim 1, **characterized in that** the control circuit (116) is further arranged to generate a second frame and send the second frame to the first wireless communication device (104_1, STA A) through the network interface circuit (117), and the second frame is arranged to carry timing information of the subband transition at the first wireless communication device (104_1, STA A) that is requested by the wireless communication device (102, AP).

3. The wireless communication device (102, AP) of claim 1, **characterized in that** the control circuit (116) is further arranged to send the first frame to the first wireless communication device (104_1, STA A) through the network interface circuit (117), and the first frame is further arranged to carry timing information of the subband transition at the first wireless communication device (104_1, STA A) that is requested by the wireless communication device (102, AP).

4. The wireless communication device (102, AP) of claim 3, **characterized in that** the first frame is a multi-user request to send trigger frame.

5. The wireless communication device (102, AP) of claim 1, **characterized in that** the control circuit (116) is further arranged to receive a second frame from the first wireless communication device (104_1, STA A) through the network interface circuit (117), and the second frame is arranged to carry timing information of the subband transition requested by the first wireless communication device (104_1, STAA).

6. The wireless communication device (102, AP) of claim 1, **characterized in that** the control circuit (116) is further arranged to generate a second frame and send the second frame to the second wireless communication device (104_2, STAB) through the network interface circuit (117), and the second frame is arranged to inform the second wireless communication device (104_2, STAB) of an ending status of the subband transition.

7. A wireless communication device (104_1, STAA) **characterized by**:
a network interface circuit (127_1), arranged to communicate with a first wireless communication device (104_2, STAB), wherein there is a peer-to-peer link established between the wireless communication device (104_1, STA A) and the first wireless communication device (104_2, STAB); and
a control circuit (126_1), arranged to generate a first frame and send the first frame through the network interface circuit (127_1), wherein the first frame is arranged to inform the first wireless communication device (104_2, STA B) of a subband transition at the wireless communication device (104_1, STAA).

8. The wireless communication device (104_1, STA A) of claim 7, **characterized in that** the network interface circuit (127_1) is further arranged to communicate with a second wireless communication device (102, AP), the control circuit (126_1) is further arranged to receive a second frame from the second wireless communication device (102, AP) through the network interface circuit (127_1), and the second frame is arranged to carry timing information of the subband transition at the wireless communication device (104_1, STA A) that is requested by the second wireless communication device (102, AP).

9. The wireless communication device (104_1, STA A) of claim 8, **characterized in that** in response to receiving the second frame, the control circuit (126_1) is further arranged to generate a third frame and send the third frame to the second wireless communication device (102, AP) through the network interface circuit (127_1); and the first frame is generated based on the second frame, and is forwarded to the first wireless communication device (104_2, STAB).

10. The wireless communication device (104_1, STA A) of claim 9, **characterized in that** the control circuit (126_1) is further arranged to receive a multi-user request to send, hereinafter referred to as MU-RTS, trigger frame from the second wireless communication device (102, AP) through the network interface circuit (127_1); and the first frame is forwarded to the first wireless communication device (104_2, STA B) during a shared transmission opportunity indicated by the MU-RTS trigger frame.

11. The wireless communication device (104_1, STA A) of claim 8, **characterized in that** the network interface circuit (127_1) is further arranged to communicate with a second wireless communication device (102, AP), the control circuit (126_1) generates the first frame and send the first frame to the second wireless communication device (102, AP) in response to receiving the second frame, where the first frame comprises notice information of the subband transition at the wireless communication device (104_1, STA A); and the first wireless communication device (104_2, STAB) overhears the first frame to get the notice information.

12. The wireless communication device (104_1, STA A) of claim 7, **characterized in that** the network interface circuit (127_1) is further arranged to communicate with a second wireless communication device (102, AP), the control circuit (126_1) is further arranged to generate a second frame and send the second frame to the second wireless communication device (102, AP) through the network interface circuit (127_1), where the second frame is arranged to carry timing information of the subband transition requested by the wireless communication device (104_1, STA A); and the first frame is generated based on the second frame, and is sent to the first wireless communication device (104_2, STAB).

13. The wireless communication device (104_1, STA A) of claim 7, **characterized in that** the control circuit (126_1) is further arranged to generate a second frame and send the second frame to the first wireless communication device (104_2, STA B) through the network interface circuit (127_1), and the second frame is arranged to inform the first wireless communication device (104_2, STAB) of an ending status of the subband transition.

14. A wireless communication device (102, AP) **characterized by**:
a network interface circuit (117), arranged to communicate with a first wireless communication device (104_1, STA A), wherein there is a peer-to-peer link established between the first wireless communication device (104_1, STA A) and a second wireless communication device (104_2, STAB); and
a control circuit (116), arranged to generate a frame and send the frame to the first wireless communication device (104_1, STA A) through the network interface circuit (117), wherein the frame is arranged to carry timing information of a subband transition at the first wireless communication device (104_1, STA A) that is requested by the wireless communication device (102, AP), and is further arranged to carry a network allocation vector setting to protect a period on the primary band, wherein the first wireless communication device (104_1, STAA) operates on a subband during the period.

15. A wireless communication device (104_1, STAA) **characterized by**:
a network interface circuit (127_1), arranged to communicate with a first wireless communication device (102, AP) and a second wireless communication device (104_2, STA B), wherein there is a peer-to-peer link established between the wireless communication device (104_1, STA A) and the second wireless communication device (104_2, STAB); and
a control circuit (126_1), arranged to perform a frame exchange sequence between the wireless communication device (104_1, STAA) and the second wireless communication device (104_2, STAB) on a primary band and a frame exchange sequence between the wireless communication device (104_1, STA A) and the first wireless communication device (102, AP) on a subband in a time-division multiplexing manner.
